Europäisches Patentamt

European Patent Office

Office européen des brevets

(19)

(11) Veröffentlichungsnummer: **0 268 934**
**B1**

(12) # EUROPÄISCHE PATENTSCHRIFT

(45) Veröffentlichungstag der Patentschrift:
20.06.90

(51) Int. Cl.⁵: **B03C 3/68**

(21) Anmeldenummer: 87116661.7

(22) Anmeldetag: 11.11.87

(54) Verfahren und Einrichtung zur Energieversorgung eines Elektroabscheiders.

(30) Priorität: 24.11.86 DE 3640092

(43) Veröffentlichungstag der Anmeldung:
01.06.88 Patentblatt 88/22

(45) Bekanntmachung des Hinweises auf die Patenterteilung:
20.06.90 Patentblatt 90/25

(84) Benannte Vertragsstaaten:
CH DE FR GB LI SE

(56) Entgegenhaltungen:
US-A-4 600 411

(73) Patentinhaber: METALLGESELLSCHAFT AG,
Reuterweg 14 Postfach 3724, D-6000 Frankfurt/M.1(DE)
Patentinhaber: Siemens Aktiengesellschaft,
Wittelsbacherplatz 2, D-8000 München 2(DE)

(72) Erfinder: Dallhammer, Richard, Dipl.-Ing.,
Brucker-Strasse 18, D-8500 Nürnberg(DE)
Erfinder: Schmidt, Walter, Dipl.-Ing., Waldstrasse 22,
D-8525 Uttenreuth(DE)
Erfinder: Neulinger, Franz, Dipl.-Ing., Am Falltor 7,
D-6106 Erzhausen(DE)
Erfinder: Schummer, Helmut, Dipl.-Ing.,
Gustav-Adolf-Strasse 27, D-6056 Heusenstamm(DE)

(74) Vertreter: Fuchs, Franz-Josef, Dr.-Ing. et al,
Postfach 22 13 17, D-8000 München 22(DE)

## Beschreibung

Die Erfindung betrifft ein Verfahren zum Versorgen eines Elektroabscheiders mit in der Höhe veränderbarer Gleichspannung und überlagerten Spannungsimpulsen nach dem Oberbegriff des Anspruchs 1. Ferner betrifft die Erfindung eine Einrichtung zur Energieversorgung eines Elektroabscheiders nach diesem Verfahren.

Bei Elektroabscheidern hat es sich zur Erhöhung des Staubabscheidegrades als wirkungsvoll erwiesen, die Elektroden neben einer möglichst nahe an der Überschlagsgrenze geführten Gleichspannung zusätzlich mit Hochspannungsimpulsen variabler Pulshöhe, Pulsbreite, Pulsfolgefrequenz und/oder Pulsanstiegsgeschwindigkeit zu beaufschlagen, um zusätzliche Ladungsträger im Elektroabscheider zu erzeugen, ohne die Ausbildung eines Lichtbogens zu provozieren. Die Erzeugung der Hochspannungsimpulse geschieht in aller Regel durch Erregung der Primärwicklung eines Hochspannungstransformators, der sekundärseitig an den Elektroabscheider gekoppelt ist.

Derart versorgte Einrichtungen sind beispielsweise bekannt aus der DE-OS 30 27 172 oder aus der DE-OS 32 46 057 bekannt. Das aus der erstgenannten Druckschrift bekannte Verfahren zielt auf eine energetische Optimierung der Abscheideleistung.

Aufgabe der vorliegenden Erfindung ist die Bereitstellung eines neuen einfachen Kriteriums für die Maximierung des Abscheidegrades eines nach dem gattungsgemäßen Verfahren versorgten Elektroabscheiders.

Diese Aufgabe wird hinsichtlich des Verfahrens durch die kennzeichnenden Merkmale des Anspruchs 1 gelöst. Vorteilhafte Weiterbildungen und Ausgestaltungen des erfindungsgemäßen Verfahrens sind Gegenstand der Ansprüche 2 bis 4. Vorteilhafte Einrichtungen zur Energieversorgung eines Elektroabscheiders nach dem erfindungsgemäßen Verfahren liegen den Ansprüchen 5 bis 10 zugrunde.

Der Hauptvorteil der Erfindung besteht darin, daß der Abscheidegrad eines einschlägigen Elektroabscheiders nach einem einfachen Kriterium wirksam maximiert werden kann. Die primärseitige Erfassung des Stromimpulses, nach Anspruch 2 bzw. 6, bietet den Vorteil, daß die für die Erfassung zuständigen Organe nicht hochspannungsfest zu sein brauchen. Die Maßnahme nach Anspruch 3 bzw. 9 stellt sicher, daß die Gleichspannung des Elektroabscheiders in Anpassung an seine sich ständig ändernden Betriebsbedingungen stets möglichst nahe an der Überschlagsgrenze geführt wird. Die nach Anspruch 7 vorgesehene veränderbare Induktivität in dem durch den Elektroabscheider in Verbindung mit der Impulsspannungsquelle gebildeten Schwingkreis ergibt eine vorteilhafte Möglichkeit der Einflußnahme auf die Parameter Pulsbreite und Pulsanstiegsgeschwindigkeit.

Anhand eines in der Zeichnung dargestellten Ausführungsbeispiels wird die Erfindung nachstehend näher erläutert. Es zeigt:

Fig. 1 eine Einrichtung zur erfindungsgemäßen Energieversorgung eines Elektroabscheiders;

Fig. 2 ein Diagramm mit den Verläufen eines Spannungsimpulses und eines zugehörigen Stromimpulses;

Fig. 3 ein Diagramm mit einer Kurve der Abhängigkeit des Abscheiderstromes von der Höhe der angelegten Gleichspannung;

Fig. 4 ein Diagramm mit einem typischen Verlauf der von Spannungsimpulsen überlagerten Gleichspannung eines erfindungsgemäß versorgten Elektroabscheiders.

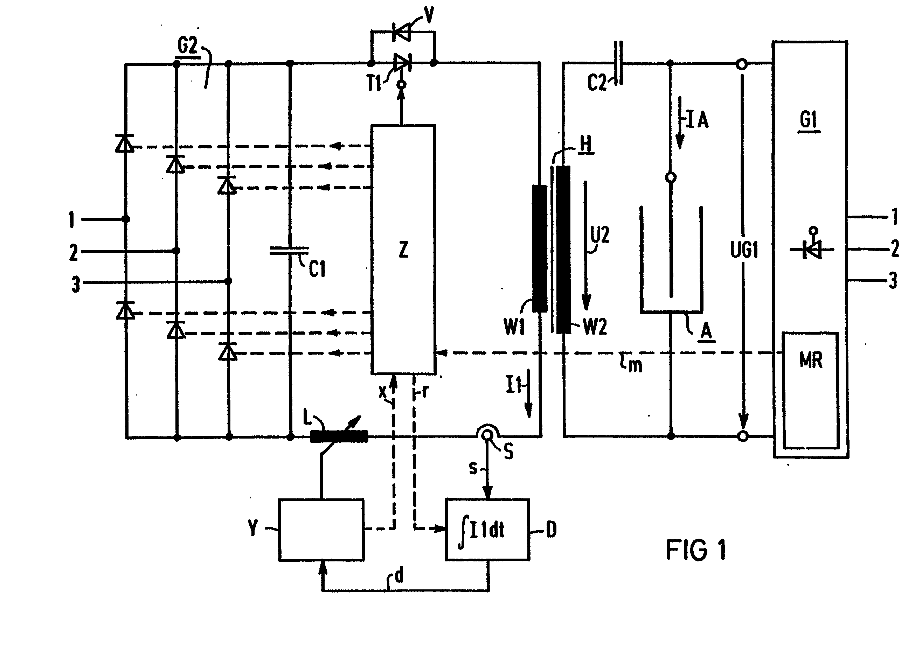

Die in Fig.1 dargestellte Einrichtung zur Versorgung eines Elektroabscheiders A bezieht ihre Energie aus einem Drehstromnetz mit den Phasen 1,2,3. Ein Gleichrichtergerät G1 dient als erste Gleichspannungsquelle, die den Elektroabscheider A mit in der Höhe veränderbarer und abhängig von Überschlägen regelbarer Gleichspannung UG1 speist. Dieser Gleichspannung UG1 werden Spannungsimpulse aus einer über eine Koppelkapazität C2 angekoppelten Impulsspannungsquelle überlagert. Diese bezieht ihre Energie aus einem als zweite Gleichspannungsquelle dienenden, von der Zündeinheit Z steuerbaren Gleichrichtersatz G2 in Verbindung mit einer Speicherkapazität C1. Die Zündeinheit Z ist in der gezeigten Anordnung auch zuständig für die periodische Zündung des Thyristors T1, der im gezündeten Zustand Strom von der Speicherkapazität C1 durch die Primärwicklung W1 des Hochspannungstransformators H fließen läßt und dabei den durch den Elektroabscheider A in Verbindung mit der Impulsspannungsquelle gebildeten Schwingkreis anstößt, wodurch in der Sekundärwicklung W2 ein Spannungsimpuls U2 induziert und über die Koppelkapazität C2 auf die Elektrode des Elektroabscheiders A übertragen wird.

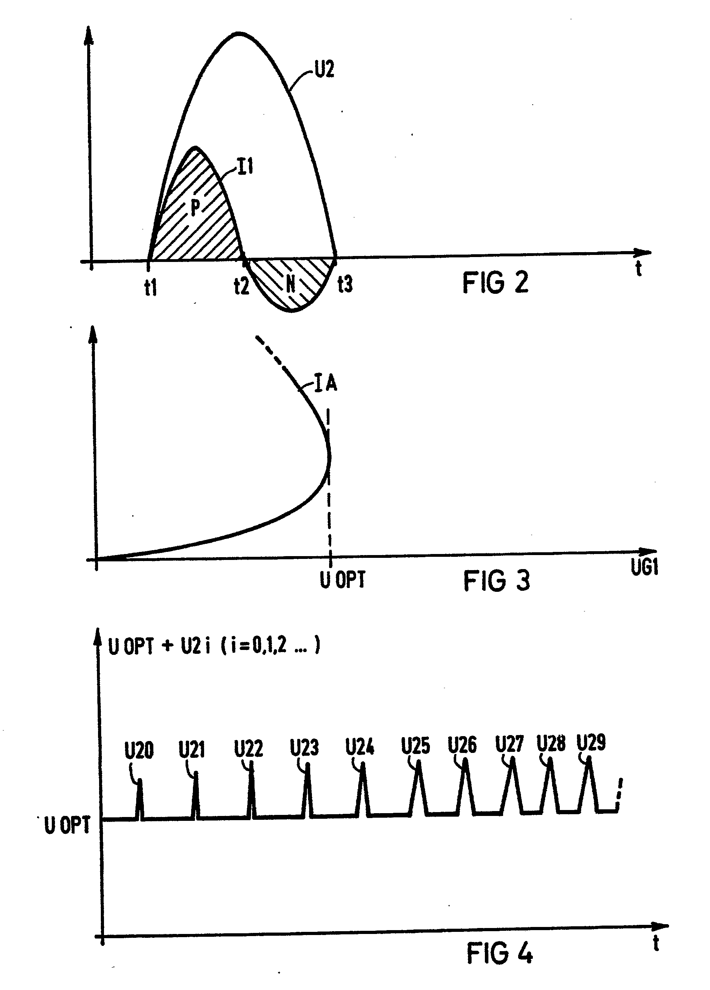

Ein solcher Spannungsimpuls U2 ist in dem Diagramm nach Fig.2 aufgetragen. Nachdem der Thyristor T1 zum Zeitpunkt t1 gezündet hat, führt der Stromimpuls I1 zum Erreichen des Maximums des Spannungsimpulses U2 im Zeitpunkt t2. Der zunächst positive Werte aufweisende Stromimpuls I1 erreicht zum Zeitpunkt t2 den Wert Null, und der Thyristor T1 geht in den Sperrzustand über. Aufgrund der ihm antiparallel geschalteten Diode V nimmt der Stromimpuls I1 anschließend negative Werte an, da nicht die gesamte Energie des übertragenen Impulses in eine Ionisation von Staubpartikeln umgesetzt wird. Die zurückschwingende Energie wird über die Diode V auf die Speicherkapazität C1 zurückgeladen.

Die Strom-Zeit-Fläche P des Stromimpulses I1 zwischen den Zeitpunkten t1 und t2 entspricht der Energie, die von der Impulsspannungsquelle zunächst auf den Elektroabscheider A übertragen wird, bevor zwischen den Zeitpunkten t2 und t3 ein Teil dieser Energie - repräsentiert durch die Strom-Zeit-Fläche N - zur Impulsspannungsquelle zurückübertragen wird. Die Differenz der Energien - repräsentiert durch die Differenz P - N der Strom-Zeit-Flächen P und N - erklärt sich aus der durch den Spannungsimpuls U2 bewirkten Erhöhung des ionisierenden Koronastroms im Elektroabscheider A. Die Differenz P - N ist also ein Maß für die Effizienz der Erzeugung ladungstragender Staubpartikel, die durch das vom Gleichrichtergerät G1 erzeugte Gleichfeld an die Elektroden des Elektroabscheiders A transportiert und dort abgeschieden werden.

Dieser Zusammenhang wird nun zur gezielten Erhöhung des Abscheidegrades des Elektroabscheiders A ausgenutzt, indem die Differenz P - N der Strom-Zeit-Flächen P und N des Stromimpulses I1 auf der Primärseite des Hochspannungstransformators H gemessen wird. Gleichwertig könnte der Stromimpuls in der Sekundärwicklung W2 des Hochspannungstransformators H gemessen und ausgewertet werden, jedoch unter erhöhtem meßtechnischen Aufwand aufgrund der höheren sekundärseitigen Spannung.

Der Stromsensor S erfaßt den primären Stromimpuls I1 und gibt ein diesen repräsentierendes Stromsignal s an einen Integrator D weiter. Dieser wird jeweils mit Beginn einer Zündung des Thyristors T1 durch die Zündeinheit Z über die Rücksetzleitung r auf den Anfangswert Null gesetzt. Durch die Integration des Stromimpulses I1 in dem Zeitintervall zwischen den Zeitpunkten t1 und t3 repräsentiert das Ausgangssignal des Integrators D am Ende des genannten Intervalls die Differenz P - N der Strom-Zeit-Flächen P und N. Dieses Differenzsignal d wird einer Auswerteeinheit Y zugeführt, welche eine veränderbare Induktivität L im Laufe einer Serie von Spannungsimpulsen so verstellt, daß die Differenz P - N maximal wird. Durch die Veränderung des Werts der im Stromweg des Stromimpulses I1 liegenden Induktivität L sind die Pulsbreite und die Pulsanstiegsgeschwindigkeit beeinflußbar. Außerdem kann jedoch auch vorgesehen sein, daß die Auswerteeinheit Y über eine Steuerleitung x und die Zündeinheit Z den Gleich richtersatz G2 und/oder den Thyristor T1 und damit die Pulshöhe und/oder die Pulsfolgefrequenz der Spannungsimpulse im beschriebenen Regelsinn beeinflußt.

Der Abscheidegrad des Elektroabscheiders A hängt nicht nur von der Qualität der angelegten Spannungsimpulse ab, sondern auch von der Höhe der Gleichspannung UG1 des Gleichrichtergerätes G1. Diese Gleichspannung soll einerseits möglichst hoch sein, um den Prozeß der Erzeugung und des Transports von Ladungsträgern im Inneren des Elektroabscheiders A zu begünstigen, andererseits soll die elektrische Feldstärke im Elektroabscheider A unterhalb der Überschlagsgrenze bleiben. Diese Überschlagsgrenze als solche ist schwer meßbar und schwankt außerdem mit den Betriebsbedingungen. Die verbreitetste Metho-de der Führung der Gleichspannung UG1 besteht daher darin, sie systematisch so lange zu erhöhen, bis ein Überschlag auftritt, und diesen Vorgang zyklisch fortlaufend zu wiederholen, wobei die regelmäßigen Überschläge mit ihren ungünstigen Auswirkungen auf Energieverbrauch, Elektrodenstandzeit, Elektroniklebensdauer und Abscheideleistung in Kauf genommen werden.

Die Häufigkeit der Überschläge läßt sich erheblich reduzieren, in dem eine Meß- und Regeleinheit MR selbsttätig intervallweise die aktuelle Kurve der Abhängigkeit des Abscheiderstromes IA von der Höhe der Gleichspannung UG1 mißt und letztere in den Bereich UOPT der größten Steilheit der Kurve regelt. Eine solche charakteristische Kurve ist im Diagramm nach Fig.3 dargestellt. Die Einstellung der Gleichspannung UG1 auf den Bereich UOPT der größten Steilheit der Kurve stellt sicher, daß der Elektroabscheider A in der Nähe der Überschlagsgrenze, aber noch unterhalb derselben betrieben wird.

Da sich die charakteristische Kurve der Abhängigkeit des Abscheiderstromes IA von der Höhe der Gleichspannung UG1 aufgrund schwankender Betriebsbedingungen - insbesondere schwankender Staubqualität und Staublast - laufend ändern kann, wird sie zyklisch neu gemessen und ausgewertet. Eine neue Messung kann jeweils angestoßen werden durch eine Zeitschaltung, einen Staubmonitor und/oder eine Überschlagerfassungseinheit. Die Meß- und Regeleinheit MR kann noch über eine Steuerleitung m zur Zündeinheit Z verfügen, um in Abhängigkeit von der aktuellen Höhe der Gleichspannung UG1 die Pulshöhe und/oder Pulsfrequenz der Spannungsimpulse zu beschränken.

Die Zündeinheit Z, die Auswerteeinheit Y und/oder die Meß- und Regeleinheit MR können in vielen praktischen Anwendungsfällen vorteilhaft einen Prozeßrechner, insbesondere digitalen Mikrorechner, enthalten. Die Funktionen dieser Einheiten können auch in einem solchen Rechner zentralisiert sein.

Eine typische Vorgehensweise zur Versorgung des Elektroabscheiders A mit einer zur Erzielung eines maximalen Abscheidegrades geeigneten Gesamtspannung zeigt das Diagramm nach Fig.4. Der wie beschrieben ausgewählte Bereich UOPT der Gleichspannung UG1 wird von Spannungsimpulsen U2i (i = 0,1,2...) überlagert, die auf folgende Weise optimiert werden: Ausgehend vom Spannungsimpuls U20 wird die Pulshöhe der nachfolgenden Spannungsimpulse U21, U22 gerade soweit erhöht, daß zwar der durch sie geleistete Koronastrom zunimmt, aber aufgrund ihrer Schmalheit noch kein Überschlag provoziert wird. Im Verlauf der Spannungsimpulse U23 bis U25 wird anschließend die Pulsbreite durch Verstellen der veränderbaren Induktivität L auf den Wert gebracht, der die größte Differenz P - N der positiven und der negativen Strom-Zeit-Flächen P, N des Stromimpulses I1 zur Folge hat. Dabei ist die maximal 200 Mikrosekunden betragende Pulsbreite der Spannungsimpulse aus zeichnerischen Gründen übertrieben dargestellt. Schließlich wird im Bereich der Spannungsimpulse U25 bis U29 auch noch die Pulsfolgefrequenz soweit erhöht, bis die Überschlagsgrenze gerade noch nicht erreicht ist. Die Obergrenze der Pulsfolgefrequenz liegt bei einigen hundert Hertz.

Dieser Einstellvorgang wird, beginnend von der Ermittlung des Bereiches der größten Steilheit der charakteristischen Kurve gemäß Fig.3, zyklisch neu angestoßen, sei es jeweils nach Ablauf einer bestimmten Zeitspanne oder nach Feststellung einer wesentichen Änderung von Last, Staubart, Temperatur etc.. Dadurch wird der Staubabscheidegrad des Elektroabscheiders A bei minimaler Überschlagshäufigkeit maximiert.

## Patentansprüche

1. Verfahren zum Versorgen eines Elektroabscheiders mit in der Höhe veränderbarer Gleichspannung und überlagerten Spannungsimpulsen, die jeweils durch primärseitiges Erregen eines sekundärseitig an den Elektroabscheider gekoppelten Hochspannungstransformators mit einem schwingenden Stromimpuls erzeugt werden, wobei mindestens einer der Parameter Gleichspannung, Pulshö- he, Pulsbreite, Pulsfolgefrequenz und Pulsan- stiegsgeschwindigkeit veränderbar ist, **dadurch gekennzeichnet,** daß die Differenz (P-N) zwischen der positiven und der negativen Strom-Zeit-Fläche (P;N) des Stromimpulses (I1) erfaßt und durch Ver- ändern mindestens eines der Parameter maximiert wird.

2. Verfahren nach Anspruch 1, **dadurch gekennzeichnet,** daß die Differenz (P-N) zwischen der positiven und der negativen Strom-Zeit-Fläche (P;N) des Stromimpulses (I1) primärseitig erfaßt wird.

3. Verfahren nach Anspruch 1 oder 2, **dadurch gekennzeichnet,** daß in vorgebbaren oder von den Betriebsbedingungen des Elektroabscheiders (A) abhängigen Zeitabständen die aktuelle Kurve der Abhängigkeit des Abscheiderstromes (IA) von der Höhe der Gleichspannung (UG1) gemessen wird, daß der Bereich der größten Steilheit der Kurve ermittelt wird und daß die Gleichspannung (UOPT) dieses Bereichs bis zur nächsten Messung beibehalten wird.

4. Verfahren nach Anspruch 1, 2 oder 3, **dadurch gekennzeichnet,** daß bei gegebener Höhe der Gleichspannung (UG1) die Pulshöhe und die Pulsfolgefrequenz der Spannungsimpulse auf Werte an oder unterhalb der Überschlagsgrenze des Elektroabscheiders (A) beschränkt werden.

5. Einrichtung zur Energieversorgung eines Elektroabscheiders nach dem Verfahren gemäß Anspruch 1 mit

a) einer ersten Gleichspannungsquelle, die den Elektroabscheider mit in der Höhe veränderbarer und abhängig von Überschlägen regelbarer Gleichspannung speist;

b) einer Impulsspannungsquelle, bei der aus einer zweiten regelbaren Gleichspannungsquelle über die Antiparallelschaltung eines Thyristors und einer Diode die Primärwicklung eines Hochspannungstransformators, dessen Sekundärwicklung über eine Koppelkapazität an die Elektrode des Elektroabscheiders gekoppelt ist, erregbar ist;

c) einer dem Thyristor zugeordneten Zündeinheit, die periodisch den Thyristor zündet, so daß jedesmal der durch den Elektroabscheider in Verbindung mit der Impulsspannungsquelle gebildete Schwingkreis angestoßen wird und ein erregender Stromimpuls eine Periode schwingen kann, **gekennzeichnet durch**

d) einen Stromsensor (S) zur Erfassung des von der Impulsspannungsquelle abgegebenen Strom- impulses (I1) und zur Abgabe eines den Stromim- puls (I1) repräsentierenden Stromsignals (s);

e) einen Integrator (D) zur Integration des Stromsignals (s) und zur Abgabe eines die Differenz (P-N) zwischen der positiven und der negativen Strom-Zeit-Fläche (P;N) repräsentierenden Differenzsignals (d);

f) eine Auswerteeinheit (Y) zur Auswertung des Differenzsignals (6) und zur Veränderung mindestens eines der Parameter Pulshöhe, Pulsbreite, Pulsfolgefrequenz und Pulsanstiegsgeschwindigkeit in Richtung auf zunehmende Werte der Differenz (P-N) zwischen der positiven und der negativen Strom-Zeit-Fläche (P;N).

6. Einrichtung nach Anspruch 5, **dadurch gekennzeichnet,** daß der Stromsensor (S) den von der Impulsspannungsquelle abgegebenen Strompuls (I1) auf der Seite der Primärwicklung (W1) des Hochspannungstransformators (H) erfaßt.

7. Einrichtung nach Anspruch 5 oder 6, **gekennzeichnet** durch eine nach Maßgabe der Auswerteeinheit (Y) veränderbare Induktivität (L) in dem durch den Elektroabscheider (A) in Verbindung mit der Impulsspannungsquelle gebildeten Schwingkreis.

8. Einrichtung nach einem der Ansprüche 5 bis 7, **gekennzeichnet** durch einen Prozeßrechner, insbesondere digitalen Mikrorechner, zur Zündung des Thyristors (T1) und/oder zur Auswertung des Differenzsignals (d) und Veränderung mindestens eines der Parameter.

9. Einrichtung nach einem der Ansprüche 5 bis 8, zur Durchführung des Verfahrens nach Anspruch 3, **gekennzeichnet** durch eine Meß- und Regeleinheit (MR) zum selbsttätigen intervallweisen Messen der aktuellen Kurve der Abhängigkeit des Abscheiderstromes (IA) von der Höhe der Gleichspannung (UG1) und zum Regeln der Gleichspannung (UG1) in den Bereich (UOPT) der größten Steilheit der Kurve.

10. Einrichtung nach Anspruch 9, **gekennzeichnet** durch einen Prozeßrechner, insbesondere digitalen Mikrorechner, in der Meß- und Regeleinheit (MR).

## Revendications

1. Procédé pour alimenter un séparateur électrostatique avec une tension continue d'amplitude modifiable et avec des impulsions de tension superposées, qui sont produites respectivement au moyen de l'excitation, sur le côté primaire, d'un transformateur de haute tension dont le côté secondaire est accouplé au séparateur électrostatique, à l'aide d'une impulsion de courant oscillatoire, et selon lequel au moins l'un des paramètres que sont la tension continue, l'amplitude des impulsions, la durée des impulsions, la fréquence de récurrence des impulsions et la vitesse de montée des impulsions, est modifiable, caractérisé par le fait qu'on détecte la différence (P–N) entre les surfaces courant-temps positive et négative (P; N) de l'impulsion de courant (I1) et qu'on la règle à sa valeur maximale en modifiant au moins l'un des paramètres.

2. Procédé suivant la revendication 1, caractérisé par le fait qu'on détecte sur le côté primaire la différence (P–N) entre les surfaces courant-temps positive et négative (P; N) de l'impulsion de courant (11).

3. Procédé suivant la revendication 1 ou 2, caractérisé par le fait qu'on mesure, à des intervalles de temps pouvant être prédéterminés ou dépendant des conditions de fonctionnement du séparateur électrostatique (A), la courbe réelle de variation du courant (IA) du séparateur en fonction de l'amplitude de la tension continue (UG1), qu'on détermine la zone de la courbe, dans laquelle la pente est maximale, et que l'on maintient la tension continue (UOPT) de cette zone jusqu'à la mesure suivante.

4. Procédé suivant la revendication 1, 2 ou 3, caractérisé par le fait que, pour une amplitude donnée de la tension continue (UG1), l'amplitude et la fréquence de récurrence des impulsions de tension sont limitées à des valeurs proches ou inférieures à la limite de la décharge disruptive du séparateur électrostatique (A).

5. Dispositif pour alimenter en énergie un séparateur électrostatique à l'aide du procédé suivant la revendication 1, comportant

a) une première source de tension continue, qui alimente le séparateur électrostatique avec une tension continue dont l'amplitude peut être modifiée et qui est réglable en fonction de décharge disruptive;

b) une source d'impulsions de tension, dans laquelle l'enroulement primaire d'un transformateur à haute tension, dont l'enroulement secondaire est accouplé par l'intermédiaire d'une capacité de couplage à l'électrode du séparateur électrostatique, peut être excité à partir d'une seconde source réglable de tension continue, par l'intermédiaire du montage antiparallèle d'un thyristor et d'une diode;

c) une unité d'amorçage, qui est associée au thyristor et amorce ce dernier périodiquement de sorte que, chaque fois, le circuit oscillant formé par le séparateur électrostatique combiné à la source d'impulsions de tension, est activé et qu'une impulsion de courant excitatrice peut osciller pendant une période, caractérisé par

d) un détecteur de courant (S) servant à détecter l'impulsion de courant (I1) délivrée par la source d'impulsions de tension, et à délivrer un signal de courant (s) représentant l'impulsion de courant (I1);

e) un intégrateur (D) servant à intégrer le signal de courant (s) et à délivrer un signal de différence (d) représentant la différence (P−N) entre les surfaces courant-tension positive ou négative (P; N);

f) une unité d'évaluation (Y) servant à évaluer le signal de différence (6) et à modifier au moins l'un des paramètres que sont l'amplitude des impulsions, la durée des impulsions, la fréquence de récurrence des impulsions et la vitesse de montée des impulsions, en direction de valeurs croissantes de la différence (P−N) entre les surfaces courant-temps positive et négative (P; N).

6. Dispositif suivant la revendication 5, caractérisé par le fait que le détecteur de courant (S) détecte l'impulsion de courant (I1), délivrée par la source d'impulsions de tension, sur le côté de l'enroulement primaire (W1) du transformateur à haute tension (H).

7. Dispositif suivant la revendication 5 ou 6, caractérisé par une inductance (L), qui est modifiable en fonction de l'unité d'évaluation (Y) et est disposée dans le circuit oscillant formé par le séparateur électrostatique (A) combiné à la source d'impulsions de tension.

8. Dispositif suivant l'une des revendications 5 à 7, caractérisé par un calculateur de processus, notamment un micro-ordinateur numérique, pour l'amorçage du transistor (T1) et/ou l'évaluation du signal de différence (d) et la modification d'au moins l'un des paramètres.

9. Dispositif suivant l'une des revendications 5 à 8, pour la mise en o œuvre du procédé suivant la revendication 3, caractérisé par une unité de mesure et de régulation (MR) servant à mesurer automatiquement, par intervalles, la courbe réelle de variation de courant (IA) du séparateur en fonction de l'amplitude de la tension continue (UG1) et à régler la tension continue (UG1) dans la zone (UOPT), dans laquelle la courbe possède la pente maximale.

10. Dispositif suivant la revendication 9, caractérisé par un calculateur de processus, notamment un micro-ordinateur numérique, situé dans l'unité de mesure et de régulation (MR).

**Claims**

1. Method for supplying an electrostatic precipitator with direct voltage, the level of which is variable, and superimposed voltage pulses which are produced, from time to time, through excitation of a high-voltage transformer with an oscillating current pulse on the primary side, which transformer is coupled on the secondary side to the electrostatic precipitator, in which case at least one of the parameters direct voltage, pulse height, pulse width, pulse repetition frequency and pulse rate of rise, is variable, characterised in that the difference (P−N) between the positive and the negative current-time-area (P; N) of the current pulse (I1) is detected and maximized through variation of at least one of the parameters.

2. Method according to claim 1, characterised in that the difference (P−N) between the positive and the negative current-time-area (P; N) of the current pulse (I1) is detected on the primary side.

3. Method according to claim 1 or 2, characterised in that the actual curve of the dependence of the precipitator current (IA) upon the level of the direct voltage (UG1) is measured at time intervals which may be preset or are dependent upon the operating conditions of the electrostatic precipitator (A), that the range of the greatest steepness of the curve is determined and that the direct voltage (UOPT) of this range is maintained until the next measurement.

4. Method according to claim 1, 2 or 3, characterised in that, at a given level of the direct voltage (UG1), the pulse height and the pulse repetition frequency of the voltage pulses are limited to values at or below the flashover limit of the electrostatic precipitator (A).

5. Apparatus for supplying an electrostatic precipitator with energy according to the method of claim 1 having

   a) a first direct voltage source which feeds the electrostatic precipitator with direct voltage, the level of which is variable and which voltage may be regulated in a manner dependent upon flashovers;

   b) a pulse voltage source, with which the primary winding of a high-voltage transformer, the secondary winding of which is coupled by way of a coupling capacitance to the electrode of the electrostatic precipitator, may be excited from a second direct voltage source, which may be regulated, by way of the anti-parallel connection of a thyristor and a diode;

   c) an ignition unit which is coordinated with the thyristor and periodically ignites the thyristor so that each time the oscillating circuit formed by the electrostatic precipitator in conjunction with the pulse voltage source is triggered and an exciting current pulse can oscillate for a cycle, characterised by

   d) a current sensor (S) for the detection of the current pulse (I1) emitted from the pulse voltage source and for the emission of a current signal (s) representing the current pulse (I1);

   e) an integrator (D) for the integration of the current signal (s) and for the emission of a difference signal (d) representing the difference (P–N) between the positive and the negative current-time-area (P; N);

   f) an evaluation unit (Y) for evaluating the difference signal (6) and for varying at least one of the parameters pulse height, pulse width, pulse repetition frequency and pulse rate of rise in the direction of growing values of the difference (P–N) between the positive and the negative current-time-area (P; N).

6. Apparatus according to claim 5, characterised in that the current sensor (S) detects the current pulse (I1), emitted from the pulse voltage source, on the side of the primary winding (W1) of the high-voltage transformer (H).

7. Apparatus according to claim 5 or 6, characterised by an inductance (L), which may be varied in accordance with the evaluation unit (Y), in the oscillating circuit formed by the electrostatic precipitator (A) in conjunction with the pulse voltage source.

8. Apparatus according to one of the claims 5 to 7, characterised by a process computer, more particularly a digital microcomputer, for igniting the thyristor (T1) and/or for the evaluation of the difference signal (d) and variation of at least one of the parameters.

9. Apparatus according to one of the claims 5 to 8 for carrying out the method according to claim 3, characterised by a measuring and regulating unit (MR) for automatically measuring at intervals the actual curve of the dependence of the precipitator current (IA) upon the level of the direct voltage (UG1) and for regulating the direct voltage (UG1) into the range (UOPT) of the greatest steepness of the curve.

10. Apparatus according to claim 9, characterised by a process computer, more particularly a digital microcomputer, in the measuring and regulating unit (MR).

FIG 1

EP 0 268 934 B1

U2

I1

P

t1    t2    N    t3    t    FIG 2

IA

U OPT    FIG 3    UG1

U OPT + U2 i ( i = 0,1,2 ... )

U20  U21  U22  U23  U24  U25  U26  U27  U28  U29

U OPT

t

FIG 4